# FASCICULE DE BREVET EUROPEEN

(11) **EP 0 768 548 B1**
(45) Date de publication et mention de la délivrance du brevet: **30.12.1998**
(21) Numéro de dépôt: 96402137.2
(22) Date de dépôt: 08.10.1996
(51) Int. Cl.: G02B 6/38, G02B 6/36

(54) **Dispositif permettant de faciliter la réalisation de connectiques de fibres optiques**
Gerät zum Erleichtern der Herstellung optischer Faserverbindungen
Device for simplifying the connection of optical fibers

(30) Priorité: 09.10.1995 FR 9511878
(43) Date de publication de la demande: 16.04.1997
(73) Titulaire: FRANCE TELECOM, 75015 Paris (FR)
(72) Inventeur: Loustau, Christian, Cabinet Ballot-Schmit, 94230 Cachan (FR); Chan Kui Cheong, Albert, Cabinet Ballot-Schmit, 94230 Cachan (FR); Laine, Fabrice, Cabinet Ballot-Schmit, 94230 Cachan (FR); Joubert, Raymond, Cabinet Ballot-Schmit, 94230 Cachan (FR)
(74) Mandataire: Schmit, Christian Norbert Marie

(56) Documents cités:
- EP-A- 0 104 513
- US-A- 4 135 782
- US-A- 4 426 055
- PATENT ABSTRACTS OF JAPAN vol. 3, no. 113 (E-139), 19 Septembre 1979 & JP-A-54 091248 (HITACHI), 19 Juillet 1979,

## Description

L'invention concerne un dispositif permettant de faciliter la réalisations des connectiques de fibres optiques. Les connexions réalisées avec un tel dispositif sont très utiles pour effectuer des raccords entre fibres optiques ou entre des fibres optiques et un ou plusieurs appareils de mesure, notamment dans le domaine des télécommunications par fibres optiques.

La connectique d'une fibre optique est définie comme étant une fibre aux extrémités de laquelle sont fixés des connecteurs qui permettent de la raccorder à une autre fibre optique, à un appareil de mesure quelconque ou encore à une source lumineuse. La connectique permet donc de laisser passer la lumière, à travers des connecteurs, d'une fibre à une autre par exemple.

La réalisation d'une connectique consiste par exemple à polymériser, en deux étapes, une résine appliquée sur deux points de soudure situés à l'avant et à l'arrière d'un connecteur placé sur une fibre optique. La polymérisation de cette résine est effectuée au moyen d'une lumière issue d'une source lumineuse et traversant un guide flexible de lumière, sur lequel est raccordé un embout. Cet embout permet d'entourer le point de soudure situé à l'arrière du connecteur, lors de l'étape de polymérisation arrière de la connectique. De plus, cet embout comporte un orifice apte à recevoir l'avant du connecteur, lors de l'étape de polymérisation avant de la connectique.

Il existe plusieurs sortes de connecteurs pour fibres optiques: les plus courants dans le domaine des télécommunications sont les connecteurs VFO et EC commercialisés par la société Radiall et les connecteurs NTT-FC et ATT-ST, fournis par de nombreuses sociétés.

La réalisation d'une connectique est cependant fastidieuse et nécessite une grande précision. En effet, il est très important d'immobiliser le connecteur par rapport à l'embout porteur de la fibre amenant la lumière pour la polymérisation, durant toutes les opérations, de manière à obtenir une polymérisation régulière des points de soudure, situés de part et d'autre du connecteur, et par conséquent une connectique de bonne qualité.

Actuellement, les connectiques des fibres optiques sont encore réalisées à mains nues. Ainsi, durant toutes les étapes de polymérisation, c'est-à-dire durant plusieurs minutes pour chaque étape, un opérateur doit maintenir fixement l'embout du guide amenant la lumière de polymérisation et l'ensemble constitué par le connecteur et la fibre optique.

Or, le fait de maintenir l'embout du guide de lumière et le connecteur entre les mains, pendant toute la durée de la réalisation d'une connectique, n'est pas une technique fiable. En effet, un déplacement, même infime, de l'embout et/ou du connecteur engendre des polymérisations irrégulières, et la qualité des connectiques ainsi réalisées est alors très amoindrie.

De plus, du fait qu'elle dépend entièrement de la façon dont l'opérateur a maintenu l'embout et le connecteur, pendant les opérations de polymérisation, la qualité des connectiques réalisées est très variable et en aucun cas reproductible.

Enfin cette technique de réalisation nécessite des temps de réalisation extrêmement longs et elle ne permet pas de travailler sur plusieurs connecteurs simultanément, en vue de réaliser plusieurs connectiques.

La présente invention propose donc un dispositif permettant de pallier tous les inconvénients précités. Un tel dispositif permet en effet de maintenir fixement à la fois l'embout du guide de lumière et le connecteur, et de libérer les mains de l'opérateur.

Un objet de l'invention se rapporte donc à un dispositif permettant de faciliter la réalisation de la connectique d'une fibre optique, tel que défini à la revendication 1.

Ce dispositif est peu onéreux et il permet de maintenir solidement à la fois l'embout du guide de lumière et un connecteur, pendant les phases de polymérisation , si bien qu'il permet de travailler sur plusieurs connecteurs simultanément. En effet, pendant la polymérisation avant ou arrière d'une première connectique, l'opérateur a les mains libres et peut par conséquent préparer une deuxième connectique en plaçant un connecteur sur une fibre optique et en appliquant la résine à polymériser sur les points de soudure situés sur la fibre et de part et d'autre du connecteur. De ce fait, le temps de réalisation d'une connectique est considérablement réduit.

De plus, grâce à ce dispositif, l'embout du guide de lumière et le connecteur sont maintenus parfaitement immobiles pendant les phases de polymérisation si bien que la qualité des connectiques réalisées est très bonne et parfaitement reproductible.

D'autres particularités et avantages de l'invention apparaîtront à la lecture de la description faîte à titre d'exemple illustratif et non limitatif en référence aux figures annexées qui représentent:
- la figure 1a, une vue en perspective d'un dispositif selon l'invention,
- la figure 1b, une vue en coupe longitudinale d'un connecteur raccordé à une fibre optique,
- la figure 2, une vue éclatée de moyens de fixation du dispositif de la figure 1a,
- la figure 3, une vue en coupe longitudinale d'un ensemble constitué par des moyens de réglage et des moyens de fixation du dispositif de la figure 1a,
- la figure 4a, une vue de profil d'un support orientable fixé sur le dispositif de la figure 1a,
- la figure 4b, une vue de face du support orientable de la figure 4a,
- la figure 4c, une vue de dessus du support orientable de la figure 4a,
- la figure 5, une vue en perspective d'un autre mode de réalisation d'un dispositif selon l'invention.

Un mode de réalisation d'un dispositif selon l'invention sera mieux compris au regard de la figure la. Un tel dispositif comprend un montant 200 qui est stabilisé par une plaque horizontale 400 sur laquelle il est fixé par vissage, collage ou soudure par exemple, tel qu'illustré sur la figure la. Selon une variante, il peut encore être maintenu stable grâce à des pieds par exemple.

Le dispositif comporte en outre des moyens de fixation 300 d'un embout 120 d'un guide de lumière 110; des moyens de maintien 500 permettant d'immobiliser un connecteur C1 par rapport à l'embout 120 pendant la polymérisation avant de la connectique; et un système d'attache 800 apte à maintenir un connecteur C2 immobile pendant la polymérisation arrière de la connectique . Enfin, des moyens de blocage/déblocage 700 sont également prévus afin d'empêcher ou au contraire de permettre un pivotement et une translation de l'embout 120 de manière à ce que ce-dernier entoure la zone à souder située à l'arrière du connecteur C2, immobilisé par le système d'attache 800, pour réaliser la polymérisation arrière de la connectique.

De manière avantageuse, les moyens de fixation 300 de l'embout 120 et les moyens de blocage/déblocage 700 sont situés dans la partie haute du montant 200 et ils sont portés par une tige filetée 302 dont l'axe 301 est perpendiculaire à l'axe longitudinal 201 du montant 200. D'autre part, un support 600 est prévu dans la partie médiane de l'axe longitudinal 201 du montant 200. Ce support 600 permet de porter le système d'attache 800. De manière avantageuse, le support 600 est orientable, c'est-à-dire qu'il peut tourner autour de l'axe longitudinal 201 du montant 200, afin de faciliter les manipulations d'un opérateur selon qu'il est gaucher ou droitier par exemple.

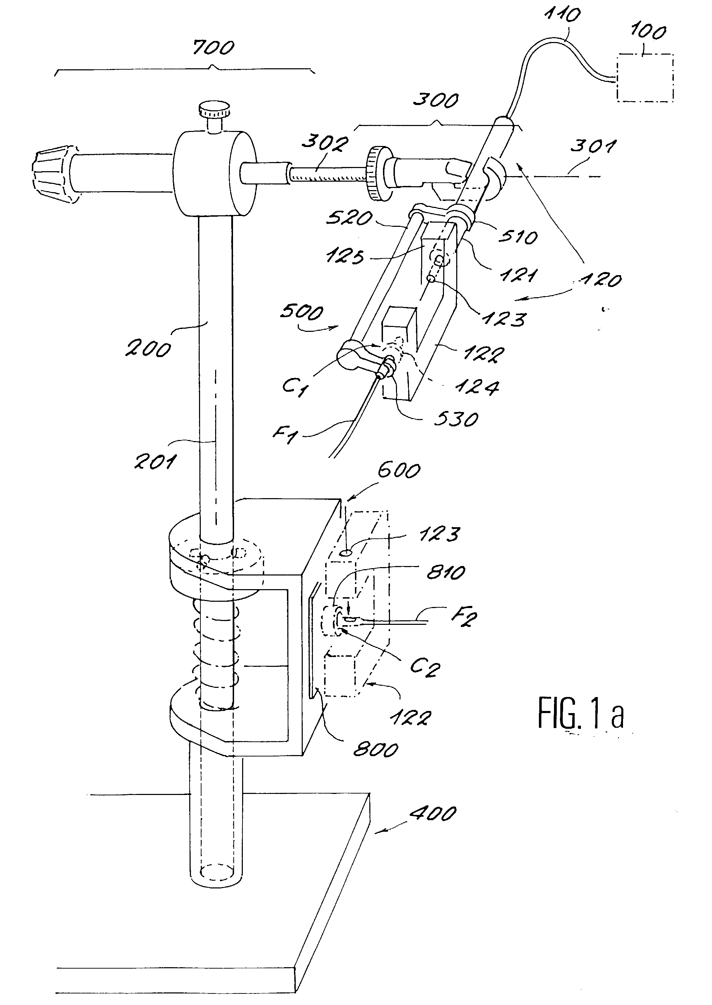

La figure 1a illustre la manière dont l'embout 120 est immobilisé lors de la polymérisation avant d'une connectique.

Pour effectuer une telle polymérisation, un tube rigide 121 de l'embout 120 est maintenu par les moyens de fixation 300, dont le fonctionnement est expliqué dans ce qui suit. Les moyens de fixation 300 sont ensuite bloqués en translation et en rotation autour de l'axe 301, de la tige filetée 302 les soutenant, à l'aide des moyens de blocage/déblocage 700, dont le fonctionnement est expliqué dans ce qui suit. De manière avantageuse, les moyens de fixation 300 sont bloqués de sorte que l'embout 120 soit en position horizontale.

L'avant d'un connecteur C₁, préalablement fixé sur une fibre optique F₁, et dont la zone à souder située à l'avant a été résiné, est ensuite placé dans un orifice 124 prévu dans l'une des branches d'une tête 122 en forme de U constituée de l'embout 120. Cette branche est définie comme étant la branche opposée à celle (125) qui est montée sur le tube rigide 121 de l'embout 120. De plus, la tête 122 de l'embout est équipée d'un petit trou 123, pratiqué sur la branche 125, de la tête 122 de l'embout, qui est montée sur le tube 121. Ce petit trou 123 permet de laisser passer la lumière issue d'une source lumineuse 100 et traversant le guide de lumière 110 sur lequel est raccordé le tube rigide 121 de l'embout 120. La lumière atteint ainsi la face avant du connecteur C₁, comme illustré par les petites flèches sur la figure 1a, pour polymériser la résine appliquée sur la zone à souder avant.

Pour réaliser une bonne polymérisation de l'avant d'une connectique, il est cependant préférable d'immobiliser le connecteur C1 par rapport à l'embout 120. Pour cela, les moyens de maintien 500 comportent, de manière avantageuse, une mâchoire 510 placée à une extrémité d'une tige rigide 520 et un crochet 530 placé à l'autre extrémité de la tige 520. La mâchoire 510 permet d'enserrer le tube 121 de l'embout 120 tandis que le crochet 530 permet de soutenir le connecteur C1 et de sécuriser son positionnement pendant la phase de polymérisation avant.

Pour effectuer une polymérisation arrière, les moyens de fixation 300 sont ensuite tournés de 90° autour de l'axe 301 de la tige filetée 302 et translatés le long de l'axe 301. Un tel mouvement des moyens de fixation 300 est autorisé par le déblocage des moyens de blocage/déblocage 700. Ainsi, l'embout 120 est fixé en position verticale et de telle sorte que sa tête 122 entoure la face arrière d'un connecteur C₂ fixé sur le système d'attache 800 du support 600. La position de la tête 122 de l'embout 120, lors de la polymérisation arrière de la connectique, est illustrée sur la figure la.

Le connecteur C₂ est fixé de manière à ce que la surface résinée, à polymériser, de la zone arrière soit orientée vers le haut, c'est-à-dire face à la lumière tombant de la tête 122 de l'embout 120 par le trou 123 faisant face à la zone à souder. Le trajet de la lumière, permettant de réaliser la polymérisation arrière, est représentée par une flèche sur la figure 1a.

Le système d'attache 800 comporte de préférence un pas de vis 810 sur lequel le connecteur C2 vient se visser. Ainsi, le système d'attache 800 peut tout simplement être un corps de traversée par exemple, adapté au type de connecteur utilisé pour la réalisation de la connectique et permettant en général d'assurer les raccords entre les fibres optiques par la mise en vis-à-vis de deux connecteurs. Cependant, une variante consiste à choisir un système d'attache comportant au moins un clip par exemple.

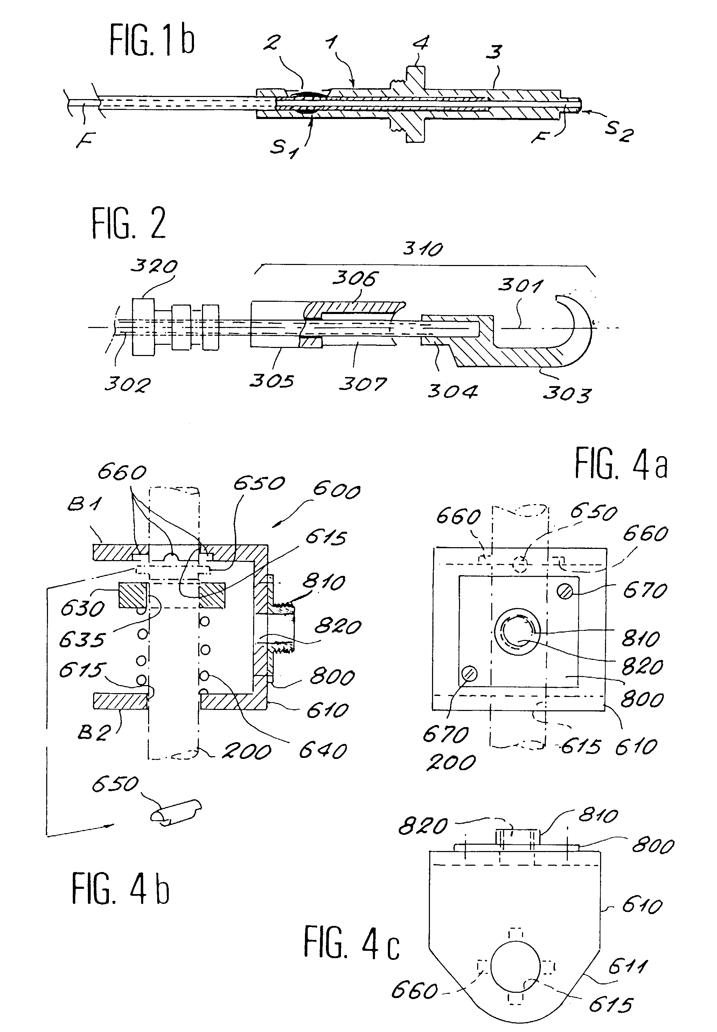

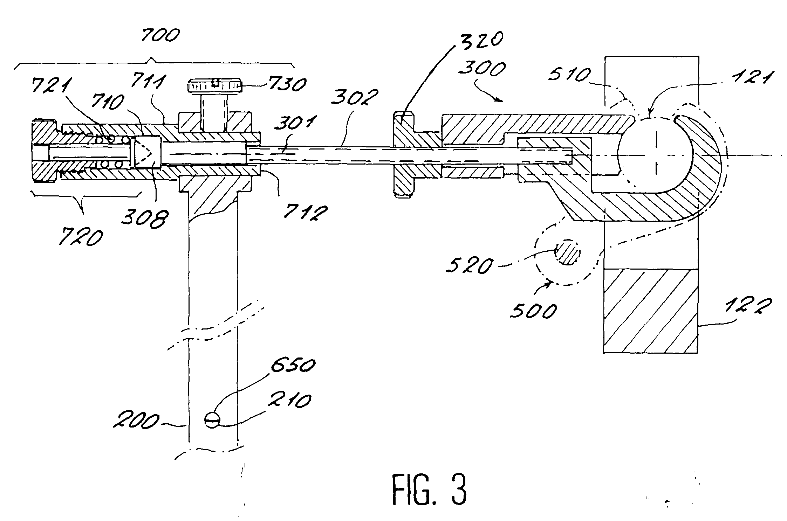

Un exemple de connecteur, de type VFO commercialisé par la société Radiall, est représenté sur la figure 1b. La partie arrière 1 du connecteur comporte un orifice 2 au fond duquel le point de soudure arrière S₁ est réalisé, par polymérisation d'une résine appliquée sur la gaine entourant une fibre optique F. De plus, la partie de la fibre optique F située à l'intérieur de la partie avant 3 du connecteur est dénudée.

Le point de soudure avant S₂ est réalisé sur la fibre F dénudée, juste en sortie de la partie avant 3 du connecteur C. Une vis 4, placée entre la partie avant 3 et la partie arrière 1, permet de visser le connecteur sur des adaptateurs, ou sur des corps de traversée permettant de raccorder deux fibres optiques l'une à l'autre par exemple, ou encore sur le système d'attache 800 prévu sur le dispositif selon l'invention pour immobiliser un connecteur lors de la polymérisation arrière d'une connectique.

La figure 2 illustre plus en détails les moyens de fixation 300 et permet de mieux comprendre leur fonctionnement. Ces moyens comportent une mâchoire 310 apte à recevoir l'embout 120 du guide de lumière . Cette mâchoire 310 est constituée d'une part d'un crochet 303 équipé d'un petit tube fileté 304 permettant de le fixer sur la tige filetée 302; et d'autre part d'un tube coulissant 305 associée à une molette 320 montée sur la tige filetée 302. Ce tube coulissant 305 possède un diamètre interne supérieur au diamétre externe du petit tube fileté 304, de manière à le recouvrir sans aucun problème.

Le tube coulissant 305 permet de régler la largeur de la mâchoire 310 de manière à ce qu'elle enserre le tube 121 de l'embout 120 du guide de lumière 110 pour le maintenir solidement. En effet, la molette 320 permet non seulement de pousser le tube coulissant 305 pour le rapprocher du crochet 303, mais aussi de s'en éloigner afin de pouvoir l'écarter du crochet 303. Par conséquent , ce système permet de fermer et d'ouvrir aisément la mâchoire 310 pour pouvoir y placer des embouts d'épaisseur sensiblement différente.

La partie supérieure du tube coulissant, permettant d'enserrer, en combinaison avec le crochet 303, le tube 121 de l'embout 120, comporte de préférence une légère protubérance 306, afin d'augmenter la fiabilité du serrage de la mâchoire 310.

En outre, pour qu'il puisse coulisser aisément le long de la tige filetée 302, sans être gêné par le crochet 303, le tube 305 comporte un évidement 307.

Enfin, du fait que le crochet 303 est fixé sur la tige filetée 302 au moyen d'un tube fileté 304, il est possible de régler la longueur de l'axe 301 de cette tige filetée 302 supportant les moyens de fixation 300. En effet, le tube 304 possède une certaine longueur permettant de faire varier sensiblement la longueur de l'axe 301 par vissage ou dévissage de ce tube 304 sur la tige filetée 302. Ce réglage de longueur est très important pour l'étape de polymérisation arrière, puisqu'il faut positionner la tête 122 de l'embout 120 de manière à ce qu'elle entoure la zone à souder arrière du connecteur et à ce que le trou 123, par lequel tombe le faisceau lumineux, soit situé juste au dessus de la zone à souder arrière.

Les moyens de blocage/déblocage 700 sont représentés en coupe longitudinale, avec les moyens de fixation 300 précédemment décrits, sur la figure 3. Tout comme les moyens de fixation 300, ces moyens de blocage/déblocage soutenus par la tige filetée 302.

Les moyens de blocage/déblocage 700 comprennent un manchon 710, une première vis pointeau 720 et une deuxième vis pointeau 730. Le manchon 710 est subdivisé en deux parties longitudinales 711 et 712. De manière avantageuse, la première partie 711 est filetée intérieurement et possède un diamètre supérieur à celui de la deuxième partie 712. La tige filetée 302 est placée dans la deuxième partie 712, de diamètre inférieur. De préférence, une cale 308 est fixée à l'extrémité de la tige filetée 302 de manière à bloquer cette-dernière dans la première partie 711 de plus grand diamètre du manchon 710.

La première vis pointeau 720 vient se visser dans la première partie 711 filetée du manchon 710. Cette vis est de préférence tarée au moyen d'un ressort 721 et permet de bloquer la rotation de la tige filetée 302 autour de son axe horizontal 301, pendant les opérations de polymérisation. En effet, lorsque la mâchoire 310 des moyens de fixation 300 enserre solidement le tube 121 de l'embout 120 du guide de lumière 110, la molette 320 appuie contre le tube coulissant 305 et ne peut donc plus tourner- autour de la tige filetée 302. Il faut alors bloquer la rotation de la tige filetée 302 dans le manchon 710 pour pouvoir bloquer la rotation des moyens de fixation 300 autour de l'axe 301. Pour cela, la première vis pointeau permet d'appliquer une pression sur la cale 308 de la tige 302 afin de la bloquer dans son logement et d'éviter sa rotation. De cette façon, la tige filetée 302 et les moyens de fixation 300 sont rendus solidaires de la vis pointeau 720. La vis pointeau 720 est tarée à l'aide d'un ressort 721 afin de pouvoir régler la pression exercée sur la cale 308 prévue à l'extrémité de la tige filetée 302.

La deuxième vis pointeau 730, avantageusement située au sommet du montant 200 et au-dessus de la deuxième partie 712 de plus petit diamètre du manchon 710, permet d'empêcher la translation de l'ensemble constitué par les moyens de fixation 300 de l'embout 120, la tige filetée 302 et le manchon 710. De plus, elle contribue, de manière avantageuse, au réglage de la longueur de l'axe 301 de la tige filetée 302 soutenant les moyens de fixation 300.

Sur la figure 3, est également représenté un trou 210 pratiqué dans la partie médiane du montant. L'utilité de ce trou est expliquée dans ce qui suit.

La figure 4b représente une vue de profil du support orientable 600 placé sur la partie médiane du montant 200 du dispositif selon l'invention.

Ce support 600 comporte une pièce en forme de "U" couché 610, une cale 630, un ressort 640 et le système d'attache 800 apte à maintenir un connecteur immobile. La pièce en forme de "U" 610 comporte un orifice 615, sur chacune des deux branches parallèles B₁, B₂ du "U", de manière à y introduire le montant 200. La cale 630 comporte également un orifice 635 de manière à y introduire le montant 200. De plus, la cale 630 est maintenue fixe sur le montant, entre les deux branches parallèles B₁ et B₂ de la pièce en "U" 610, et un ressort 640 exerçe une force de rappel entre elle et la branche inférieure B₂ de la pièce en "U". La branche supérieure B₁ de la pièce en "U" 610 repose du fait de cette force de rappel sur la cale 630.

De manière avantageuse, des ergots 650 sont disposés sur le montant 200 et au-dessus de la cale 630. Les ergots 650, qui sont par exemple au nombre de deux, sont réalisés à l'aide d'une petite tige 651 telle qu'illustrée sur la figure 4b. Cette petite tige 651 est par exemple placée dans le trou 210, pratiqué dans le montant 200 tel que représenté sur la figure 3. La tige 651 débouche alors de chaque côté du trou 210 pour former les ergots 650. Des évidements 660 sont alors pratiqués sur la face interne de la branche supérieure B₁ de la pièce en "U" 610, c'est-à-dire sur la face située en vis-à-vis de la cale 630, de manière à ce qu'ils reçoivent les ergots 650.

Les ergots définissent des positions angulaires particulières que peut prendre le support orientable 600 autour de l'axe 201 du montant 200. En soulevant la branche inférieure B2 de la pièce en "U" 610, et en appuyant par conséquent sur le ressort 640, la branche supérieure B₁ de la pièce en "U" 610 se soulève par rapport à la cale pour libérer les ergots de leurs évidements. Il est alors possible de faire tourner le support 600 jusqu'à ce qu'un autre ergot 650 vienne se loger dans un évidement 660 définissant ainsi une autre position stable que le support peut prendre.

Selon une variante, il est cependant possible de remplacer ce système d'ergots et d'évidements par un roulement à billes. Cependant, dans ce cas, il ne peut pas y avoir de positions définies du support

Le système d'attache 800, apte à immobiliser un connecteur pendant la phase de polymérisation arrière, est fixé sur la base de la pièce en "U" 610, c'est-à-dire sur la branche située entre les deux branches parallèles inférieure B2 et supérieure B1. Sa fixation est réalisée par vissage sur un pas de vis 810, ou par soudure ou collage par exemple.

Un orifice 820 est pratiqué sur la base de la pièce en "U" 610 et dans le prolongement d'un orifice pratiqué sur le système d'attache 800, afin de recevoir l'avant d'un connecteur pendant la phase de polymérisation arrière.

La figure 4a représente une vue de face du support orientable 600, c'est-à-dire une vue de la base de la pièce en "U" 610, sur laquelle est fixé le système d'attache 800. Comme il a été décrit précédemment, le système d'attache 800 comporte, de manière avantageuse, un pas de vis 810 sur lequel le connecteur peut se visser. Dans l'exemple de la figure 4a, le système d'attache 800 est amovible et est fixé sur le support 600 au moyen de vis 670 diamétralement opposées. Dans une variante de réalisation, ce système peut-être collé ou soudé mais, dans ce cas, il n'est pas amovible.

La figure 4c représente une vue de dessus du support orientable 600. Dans cet exemple, les évidements 660 sont avantageusement au nombre de quatre, opposés deux à deux, et les ergots sont au nombre de deux diamétralement opposés. De ce fait le nombre de positions définies du support orientable est égal à 4.

De plus, les branches supérieure et inférieure de la pièce en "U" 610 sont avantageusement taillées en biseaux 611, du côté opposé à la base du "U" supportant le système d'attache 800, de manière à supprimer tous les angles saillants susceptibles de blesser un opérateur.

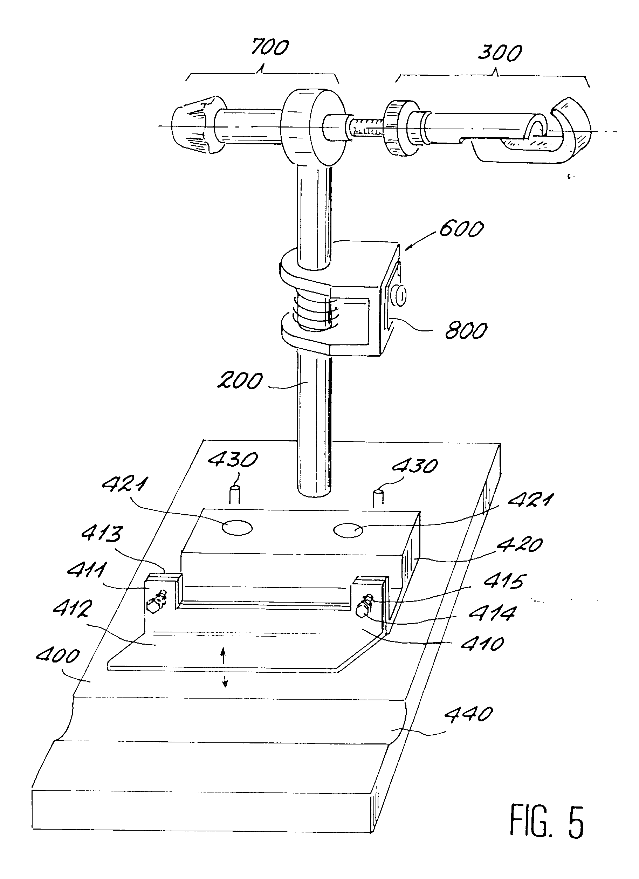

La figure 5 représente une vue en perspective d'un autre mode de réalisation d'un dispositif selon l'invention. Selon ce mode de réalisation, la partie basse du montant 200 est fixée sur une plaque horizontale 400 de travail. La fixation du montant 200 sur cette plaque est par exemple réalisée au moyen d'une vis, non représentée sur la figure 5 placée sous la plaque et débouchant dans la partie basse et filetée du montant 200. Dans ce cas le montant est amovible puisqu'il peut être dévissé de la plaque.

Une variante de réalisation consiste à souder la partie basse du montant 200 sur la plaque 400. Cependant, dans ce cas le montant est constamment fixé à la plaque, il n'est pas amovible.

De manière avantageuse, la plaque 400 comprend un système de pince-fibre 410, un bloc de mousse 420, deux tiges 430 placées en arrière du bloc de mousse, et une rigole 440.

Le système de pince-fibre 410 est fixé à la plaque 400 par exemple par collage ou par soudage.

Ce système comporte une pièce mobile 411 rattachée à une autre pièce fixe 413 par deux vis 414 placées sur les extrémités hautes des deux pièces. Les deux pièces sont de préférence en forme de "U" et elle permettent de maintenir une fibre optique dans un logement créé entre leur deux parties basses. La pièce mobile 411 comporte une partie horizontale légèrement recourbée 412. Cette partie recourbée 412 est très utile pour pouvoir placer ou retirer une fibre optique du système de pince-fibre. En effet, par une simple pression sur la partie recourbée 412 la pièce mobile s'écarte de la pièce fixe agrandissant ainsi le logement prévu pour la fibre de manière à la placer ou la dégager aisément. Cependant, pour éviter de briser la fibre optique, un ressort 415 est placé sur chacune des vis 414 de serrage des pièces mobile 411 et fixe 413 afin de permettre un réglage de la pression exercée par les deux pièces 411, 413 sur la fibre optique.

Le bloc de mousse 420 est réalisé dans une mousse, de préférence rigide, telle qu'une mousse en polyuréthane par exemple. Une ou plusieurs alvéoles 421 sont pratiquées dans ce bloc de mousse 420 pour permettre de maintenir un ou plusieurs tube de résine.

Les deux tiges 430 disposées sur la plaque 400 et en arrière du bloc de mousse permettent de créer un logement, de manière à y loger une plaque d'alumine utile pour couper un excédent de fibre optique dépassant du connecteur après la phase de polymérisation avant d'une connectique.

La rigole 440 permet de déposer le matériel essentiel à la réalisation d'une connectique, tel que les connecteurs par exemple.

La plaque 400 permet par conséquent de réunir tout le matériel nécessaire à la réalisation de connectiques et de travailler proprement sans se disperser.

Enfin, le montant 200, les moyens de fixation 300, les moyens de réglage 700,le support orientable 600, la plaque 400, le système de pince-fibre 410 et les tiges 430 sont avantageusement réalisés en matériau résistant tel que l'acier inoxydable par exemple.

## Revendications

1. Dispositif permettant de faciliter la fixation d'un connecteur (c) sur une portion d'extrémité d'une fibre optique (F) par réalisation de deux points de soudure par polymérisation d'une résine appliquée en deux zones localisées (S1, S2) respectivement situées en sortie de la partie avant (3) dudit connecteur et au niveau d'un orifice (2) ménagé dans la partie arrière (1) dudit connecteur, ladite réalisation desdits deux points de soudure par polymérisation étant effectuée en deux étapes par illumination successive desdites deux zones localisées avant et arrière dudit connecteur pourvues de résine pendant que ce dernier se trouve respectivement placé dans une première (C1) et une seconde (C2) positions, ledit dispositif comportant :
- une source lumineuse (100);
- un guide flexible de lumière (110) relié par l'une de ses extrémités à ladite source lumineuse (100), pour procéder par son autre extrémité auxdites illuminations propres à assurer lesdites polymérisations avant et arrière;
- un embout (120) raccordé à ladite autre extrémité du guide flexible d'illumination (110), ledit embout (120) comportant un tube rigide (121) entourant ladite autre extrémité dudit guide flexible d'illumination (110) ainsi qu'une tête (122) en forme de U, dont l'une des branches est raccordée audit tube rigide (121) et présente un trou (123) permettant de laisser passer ladite lumière d'illumination en provenance dudit guide flexible (110) et dont l'autre branche présente un perçage (124) débouchant en vis-à-vis dudit trou d'illumination (123) et apte à recevoir la partie avant d'un connecteur à fixer, ledit connecteur ainsi reçu dans ledit perçage (124) se trouvant alors placé dans ladite première position (C1) propre à permettre la réalisation de ladite polymérisation avant;
- des moyens de maintien (500) associés audit embout (120) et permettant d'immobiliser le connecteur dans ladite première position (C1) lors de la polymérisation avant; et
- un montant (200) supportant respectivement :
- un système d'attache (800) apte à recevoir un connecteur à fixer et à le maintenir immobile, ledit connecteur ainsi reçu dans le système d'attache (800) se trouvant alors placé dans ladite seconde position (C2) propre à permettre la réalisation de ladite polymérisation arrière;
- des moyens de fixation (300) de l'embout (120), rattachés de manière pivotable et translatable audit montant (200) pour permettre d'une part lorsqu'un connecteur est maintenu immobile dans ladite seconde position (C2) dans ledit système d'attache (800), d'amener la tête d'embout (122) en forme de U alors dépourvue de connecteur à entourer la partie arrière (1) dudit connecteur ainsi maintenu dans ladite seconde position de manière telle que le trou d'illumination (12) se situe en vis à vis de la zone localisée arrière (S1) pourvue de résine dudit connecteur pour permettre son illumination en vue de réaliser ladite polymérisation arrière, et d'autre part d'éloigner ladite tête d'embout (122) dudit système d'attache (800) ladite tête d'embout (122) dudit système d'attache (800) pour qu'elle puisse recevoir un autre connecteur dans ladite première position (C1) dans ledit perçage (124) pour opérer une polymérisation avant; et
- des moyens de blocage/déblocage (700) permettant notamment de bloquer en pivotement et/ou en translation lesdits moyens de fixation (300) de l'embout (120) lorsque la tête (122) de ce dernier a été amenée à entourer la partie arrière d'un connecteur dans ladite seconde position (C2) dans ledit système d'attache (800) ou a été éloignée dudit système d'attache (800) pour recevoir un autre connecteur dans ladite première position (C1) dans ledit perçage (124).

2. Dispositif selon la revendication 1, caractérisé en ce que les moyens de fixation (300) sont rattachés de manière pivotable et translatable audit montant (200) par l'intermédiaire d'une tige filetée (302) s'étendant perpendiculairement audit montant, et en ce que lesdits moyens de fixation comportent une mâchoire (310) apte à recevoir la tige rigide (121) de l'embout (120), ladite mâchoire étant constituée d'un crochet (303) et d'un tube coulissant (305) associé à une molette (320) montée sur la tige filetée (302) permettant de régler la largeur de la mâchoire (310) de manière à ce qu'elle maintienne solidement l'embout.

3. Dispositif selon l'une des revendications 1 à 2, caractérisé en ce que les moyens de maintien (500) comportent d'une part une mâchoire (510) placée à une extrémité d'une tige rigide (520), apte à enserrer le tube rigide (121) de l'embout (120), et d'autre part un crochet (530) placé à l'autre extrémité de la tige rigide (520), apte à soutenir le connecteur dans sa première position (C1) et à le maintenir immobile dans l'orifice (124) de ladite tête (122).

4. Dispositif selon l'une des revendications 1 à 3, caractérisé en ce que le système d'attache (800) comporte un pas de vis (810) sur lequel le connecteur vient se visser.

5. Dispositif selon la revendication 2, caractérisé en ce que les moyens de blocage/déblocage (700) comportent:
- un manchon (710) subdivisé en deux parties longitudinales (711, 712), monté au travers dudit montant (200); la première partie (711) étant filetée intérieurement et possédant un diamètre supérieur à celui de la deuxième partie (712); cette deuxième partie (712) recevant par son extrémité libre une extrémité de la tige filetée (302) soutenant les moyens de fixation (300),
- une première vis pointeau (720) reçue dans l'extrémité libre de ladite première partie filetée (711) dudit manchon (710), permettant d'empêcher la rotation de la tige filetée (302) et des moyens de fixation (300), par pression du pointeau sur l'extrémité (308) de la tige, et
- une deuxième vis pointeau (730), située au-dessus de la deuxième partie (712) de plus petit diamètre du manchon (710), permettant d'empêcher la translation de l'ensemble constitué par les moyens de fixation (300) de l'embout (120), la tige filetée (302) et le manchon (710).

6. Dispositif selon l'une des revendications 1 à 5, caractérisé en ce que ledit système d'attache (800) est monté sur le montant (200) par l'intermédiaire d'un support orientable (600) apte à porter ledit système d'attache (800).

7. Dispositif selon la revendication 6, caractérisé en ce que le support orientable (600) comporte:
- une pièce en forme de "U" couché (610) comportant un orifice (615) sur chacune des deux branches parallèles (B1, B2) du "U" (610), de manière à y introduire le montant (200),
- une cale (630) maintenue fixe sur le montant (200), entre les deux branches parallèles (B1, B2) de la pièce en "U" (610), et
- un ressort (640) exerçant une force de rappel entre ladite cale fixe (630) et la branche inférieure (B2) de la pièce en "U", de façon à permettre à la branche supérieure (B1) de la pièce en "U" de venir reposer sur ladite cale fixe,
- le système d'attache (800) étant fixé sur la base de la pièce en "U" (610).

8. Dispositif selon la revendication 7, caractérisé en ce que le support orientable (600) comporte en outre au moins un évidemment (660), pratiqué sur la face interne de la branche supérieure (B1) de la pièce en "U", apte à recevoir un ergot (650), prévu sur le montant (200) et situé juste au-dessus de l'emplacement de la cale (630), afin de définir au moins une position angulaire particulière du support autour de l'axe longitudinal (201) du montant (200).

9. Dispositif selon la revendication 7, caractérisé en ce que le support orientable (600) comporte en outre un roulement à billes, disposé entre la cale (630) et la branche supérieure (B1) de la pièce en "U" (610), afin de faciliter sa rotation autour de l'axe longitudinal (201) du montant (200).

10. Dispositif selon la revendication 6, caractérisé en ce que le support orientable (600) est situé dans la partie médiane de l'axe longitudinal (201) du montant (200).

11. Dispositif selon la revendication 2, caractérisé en ce que les moyens de fixation (300) de l'embout (120) et les moyens de blocage/déblocage (700) sont situés dans la partie haute du montant (200).

12. Dispositif selon l'une des revendications 1 à 11, caractérisé en ce que la partie basse du montant (200) est fixée sur une plaque horizontale (400).

13. Dispositif selon la revendication 12, caractérisé en ce qu'un système de pince-fibre (410) est fixé sur la plaque (400) et en ce que ce système comporte une pièce mobile (411) rattachée à une autre pièce fixe (413) par deux vis (414) placées sur les extrémités hautes des deux pièces.

14. Dispositif selon la revendication 12, caractérisé en ce que la plaque (400) comporte en outre un bloc de mousse (420) dans lequel est (sont) pratiqué(s) une ou plusieurs alvéole(s) (421) afin d'y loger un ou plusieurs tubes de résine.

15. Dispositif selon la revendication 12, caractérisé en ce que deux tiges (430) sont en outre disposées sur la plaque (400) en arrière du bloc de mousse (420).

16. Dispositif selon la revendication 12, caractérisé en ce que la plaque (400) comprend une rigole (440).

17. Dispositif selon l'une des revendications 1 à 16, caractérisé en ce qu'il est réalisé en acier inoxydable.

## Patentansprüche

1. Gerät zum Erleichtern der Befestigung eines Verbinders (C) auf einem Endstück einer optischen Faser (F) durch Herstellung von zwei Schweißpunkten durch Polymerisation eines in zwei lokalisierten Zonen (S1, S2) angebrachten Harzes, die sich jeweils am Ausgang des vorderen Teils (3) des genannten Verbinders und in Höhe einer Öffnung (2) befinden, die im hinteren Teil (1) dieses Verbinders vorgesehen ist, wobei besagte Herstellung der beiden Polymerisations-Schweißpunkte in zwei Schritten erfolgt, durch aufeinanderfolgendes Belichten der beiden lokalisierten Zonen des genannten Verbinders vorn und hinten, die mit Harz versehen sind, während dieser letztere sich jeweils in einer ersten (C1) und einer zweiten (C2) Stellung befindet, wobei das besagte Gerät umfaßt:
- eine Lichtquelle (100);
- einen flexiblen Lichtleiter (110), durch eines seiner Enden mit der genannten Lichtquelle (100) verbunden, um mit seinem anderen Ende die genannten Belichtungen für die Polymerisationen vorn und hinten ausführen zu können;
- einen Ansatz (120), festgemacht an dem genannten anderen Ende des flexiblen Lichtleiters (110), wobei der genannte Ansatz (120) ein dieses andere Ende des flexiblen Lichtleiters umgebendes steifes Rohr (121) sowie ein U-förmiges Kopfstück (122) umfaßt, dessen einer Schenkel mit dem genannten steifen Rohr (121) verbunden ist und ein Loch (123) aufweist, welches das von dem flexiblen Leiter (110) kommende Belichtungslicht passieren läßt, und dessen anderer Schenkel eine Bohrung (124) aufweist, die dem Belichtungsloch (123) gegenübersteht und den vorderen Teil eines zu befestigenden Verbinders aufnehmen kann, wobei sich der in dieser Bohrung (124) aufgenommene Verbinder dann in der genannten ersten Stellung (C1) befindet, in der die genannte vordere Polymerisation durchgeführt werden kann;
- Halteeinrichtungen (500), verbunden mit dem Ansatz (120), mit denen der Verbinder bei der vorderen Polymerisation in der genannten ersten Stellung (C1) blockiert werden kann; und
- einen Ständer (200), um folgendes zu tragen:
- ein Befestigungssystem (800) um einen zu befestigenden Verbinder aufzunehmen und zu immobilisieren, wobei dieser in dem Befestigungssystem (800) aufgenommene Verbinder sich dann in der zweiten Stellung (C2) befindet, in der die genannte hintere Polymerisation durchgeführt werden kann;
- Einspanneinrichtungen (300) des Ansatzes (120), schwenkbar und verschiebbar an dem genannten Ständer (200) befestigt, um einerseits, wenn ein Verbinder in dem Befestigungssystem (800) in der genannten zweiten Stellung (C2) immobilisiert ist, das U-förmige Kopfstück (122), dann ohne Verbinder, in eine Position zu bringen, in der es den hinteren Teil (1) des in der zweiten Stellung immobilisierten Verbinders umgibt, so daß das Belichtungsloch (12) der hinteren lokalisierten, mit Harz versehenen Zone (S1) des genannten Verbinders gegenübersteht, um seine Belichtung hinsichtlich der Durchführung der hinteren Polymerisation zu ermöglichen, und andererseits das genannte Kopfstück (122) von dem genannten Befestigungssystem (800) zu entfernen, damit es einen anderen Verbinder in der genannten ersten Stellung (C1) in der genannten Bohrung (124) aufnehmen kann, um eine vordere Polymerisation durchzuführen; und
- Blockier-/Entblockiereinrichtungen (700), insbesondere um die genannten Einspanneinrichtungen (300) des Ansatzes (120) zu blockieren, wenn das Kopfstück (122) dieses letzteren sich in einer Position befindet, in der es den hinteren Teil eines Verbinders in dem genannten Befestigungssystem (800) in der genannten zweiten Stellung (C2) umgibt, oder entfernt worden ist aus diesem Befestigungssystem (800), um einen anderen Verbinder in der genannten ersten Stellung (C1) in der genannten Bohrung (124) aufzunehmen.

2. Gerät nach Anspruch 1, dadurch gekennzeichnet, daß die Einspanneinrichtungen (300) mittels einer Gewindestange (302) schwenkbar und verschiebbar an dem genannten Ständer (200) befestigt sind, die sich rechtwinklig zu diesem Ständer erstreckt, und dadurch, daß die genannten Einspanneinrichtungen eine Klemmbacke (310) umfassen, die die steife Stange (121) des Ansatzes (120) aufnimmt, und die genannte Klemmbacke durch einen Haken (303) und ein gleitendes Rohr (305) in Verbindung mit einem Rändelrad (320) gebildet wird, das auf der Gewindestange (302) sitzt und ermöglicht, die Klemmbacke (310) so einzustellen, das der Ansatz solide festgehalten wird.

3. Gerät nach einem der Ansprüche 1 und 2, dadurch gekennzeichnet, daß die Halteeinrichtungen (500) einerseits eine Klemmbacke (510) umfassen, angeordnet an einem Ende einer steifen Stange (520) und fähig, das steife Rohr (121) des Ansatzes (120) einzuspannen, und andererseits einen Haken (530) umfassen, angeordnet am anderen Ende der steifen Stange (520) und fähig, den Verbinder in seiner ersten Stellung (C1) abzustützen und in der Öffnung (124) des genannten Kopfstücks (122) zu immobilisieren.

4. Gerät nach einem der Ansprüche 1 bis 3, dadurch gekennzeichnet, daß das Befestigungssystem (800) einen Schraubengang (810) umfaßt, in den der Verbinder geschraubt wird.

5. Gerät nach Anspruch 2, dadurch gekennzeichnet, daß die Blockier-/Entblockiereinrichtungen (700) umfassen:
- eine Hülse (710), unterteilt in zwei Längsteile (711, 712), quer den genannten Ständer (200) durchdringend, wobei der erste Teil (711) innen gewindet ist und einen größeren Durchmesser als der zweite Teil (712) hat und dieser zweite Teil (712) mit seinem freien Ende ein Ende der Gewindestange (302) aufnimmt, die die Einspanneinrichtungen (300) trägt,
- eine erste Klemmschraube (720), die in dem freien Ende des genannten ersten, gewindeten Teils (711) der Hülse (710) sitzt und durch Drücken der Spitze auf das Ende (308) der Gewindestange (302) diese Gewindestange und die Einspanneinrichtungen (300) daran hindert, sich zu drehen, und
- eine zweite Klemmschraube (730), über dem zweiten Teil (712) der Hülse (710) angeordnet, die ermöglicht, die Verschiebung der Einheit, gebildet durch die Einspanneinrichtungen (300) des Ansatzes (120), die Gewindestange (302) und die Hülse (710), zu verhindern.

6. Gerät nach einem der Ansprüche 1 bis 5, dadurch gekennzeichnet, daß das genannte Befestigungssystem (800) am Ständer (200) mittels eines ausrichtbaren Trägers (600) angebracht wird, der fähig ist das genannte Befestigungssystem (800) zu tragen.

7. Gerät nach Anspruch 6, dadurch gekennzeichnet, das der ausrichtbare Träger (600) umfaßt:
- ein "U"-förmiges Teil (610) mit einer Öffnung (615) in jedem der beiden parallelen Schenkel (B1, B2) des "U" (610), so daß man den Ständer (200) durchschieben kann,
- eine Scheibe (630), fest auf dem Ständer (200) angebracht, zwischen den beiden parallelen Schenkeln (B1, B2) des "U"-förmigen Teils (610), und
- eine Feder (640), die zwischen der feststehenden Scheibe (630) und dem unteren Schenkel (B2) des "U"-förmigen Teils eine Rückstellkraft ausübt, so daß der obere Schenkel (B2) gegen die genannte feste Scheibe gedrückt wird,
- das Befestigungssystem (800), festgemacht auf der Unterseite des "U"-förmigen Teils (610).

8. Gerät nach Anspruch 7, dadurch gekennzeichnet, daß der ausrichtbare Träger (600) außerdem wenigstens eine Vertiefung (660) umfaßt, vorgesehen auf der Innenseite des oberen Schenkels (B1) des "U"-förmigen Teils, bereit für die Aufnahme eines Stifts (650), der in dem Ständer (200) angebracht ist, knapp über der durch die Scheibe (630) eingenommenen Stelle, um wenigstens eine spezielle Winkelstellung des Trägers um die Längsachse (201) des Ständers (200) herum zu definieren.

9. Gerät nach Anspruch 7, dadurch gekennzeichnet, daß der ausrichtbare Träger (600) außerdem ein Kugellager umfaßt, angeordnet zwischen der Scheibe (630) und dem oberen Schenkel (Bl) des "U"-förmigen Teils (610), um dessen Drehung um die Längsachse (201) des Ständers (200) herum zu erleichtern.

10. Gerät nach Anspruch 6, dadurch gekennzeichnet, daß der ausrichtbare Träger (600) sich im Mittelteil der Längsachse (201) des Ständers (200) befindet.

11. Gerät nach Anspruch 2, dadurch gekennzeichnet, daß die Einspanneinrichtungen (300) des Ansatzes (120) und die Blockier-/Entblockiereinrichtungen (700) sich im oberen Teil des Ständers (200) befinden.

12. Gerät nach einem der Ansprüche 1 bis 11, dadurch gekennzeichnet, daß der untere Teil des Ständers (200) auf einer horizontalen Platte (400) befestigt ist.

13. Gerät nach Anspruch 12, dadurch gekennzeichnet, daß ein Faserklemmsystem (410) auf der Platte (400) befestigt ist, und dadurch, daß dieses System eine bewegliche Klemme (411) umfaßt, die durch zwei Schrauben (414) an einem anderen, feststehenden Teil (413) festgemacht ist, wobei die Schrauben (414) in den oberen Enden der beiden Teile vorgesehen sind.

14. Gerät nach Anspruch 12, dadurch gekennzeichnet, daß die Platte (400) außerdem einen Schaumblock (420) umfaßt, in dem eine (oder mehrere) Harzbehälter-Mulde(n) (421) vorgesehen ist (sind).

15. Gerät nach Anspruch 12, dadurch gekennzeichnet, daß auf der Platte (400) außerdem zwei Stifte (430) vorgesehen sind, hinter dem Schaumblock (420).

16. Gerät nach Anspruch 12, dadurch gekennzeichnet, daß die Platte (400) eine Rille (440) umfaßt.

17. Gerät nach einem der Ansprüche 1 bis 16, dadurch gekennzeichnet, daß es aus rostfreiem Stahl hergestellt ist.

## Claims

1. A device to facilitate the securing of a connector (C) to an end portion of an optical fibre (F) by making two weld points by polymerising a resin applied to two localised areas (S1, S2) situated respectively at the output of the front part (3) of said connector and on a level with an orifice (2) arranged in the rear part (1) of said connector, said two weld points produced by polymerisation being formed in two steps by illuminating in succession said two localised front and rear zones, to which resin has been applied, of said connector whilst the latter is positioned respectively in a first (C1) and a second (C2) position, said device comprising:
- a light source (100);
- a flexible light guide (110) connected by one of its ends to said light source (100), so that the other end thereof can be used to provide appropriate lighting to produce said front and rear polymerisation;
- an end-piece (120) connected to said other end of the flexible light guide (110), said end-piece (120) having a rigid tube (121) surrounding said other end of said flexible light guide (110) as well as a U-shaped head (122), one of the branches of which is connected to said rigid tube (121) and has a hole (123) to allow said illuminating light from said flexible guide (110) to pass through, the other branch thereof having a bore (124) opening face to face with said illumination hole (123) and designed to receive the front part of a connector to be fixed, said connector once received in said bore (124) being then placed in said first position (C1) in readiness for said front polymerisation processing;
- retaining means (500) associated with said end-piece (120) which allow the connector to be firmly retained in said first position (C1) during polymerisation at the front; and
- a post (200) supporting respectively:
- a clamp system (800) designed to receive a connector to be fixed and hold it steady, said connector thus received in the clamp system (800) then being placed in said second position (C2) in readiness for said rear polymerisation processing;
- means for fixing (300) the end-piece (120) which are mounted on said post (200) so as to be capable of pivoting and movement in translation so that, on the one hand, when a connector is held immobile in said clamp system (800) in said second position (C2), the head of the U-shaped end-piece (122), having no connector at this stage, can be moved into a position surrounding the rear part (1) of said connector thus retained in said second position so that the illumination hole (12) is located facing the rear localised zone (S1) of said connector to which resin is applied to allow it to be illuminated with a view to producing said rear polymerisation and, on the other, to move said head of the end-piece (122) away from said clamp system (800) so that it can receive another connector in said first position (C1) in said pierced hole (124) in order to operate a front polymerisation; and
- locking/unlocking means (700) specifically preventing said means for fixing (300) the end-piece (120) from pivoting and/or moving in translation when the head (122) of the latter has been positioned surrounding the rear part of a connector in said clamp system (800) in said second position (C2) or has been moved back from said clamp system (800) in order to receive another connector in said first position (C1) in said bore (124).

2. A device as claimed in claim 1, characterised in that the fixing means (300) are attached to said post (200) so as to be capable of pivoting and movement in translation by means of a threaded rod (302) extending perpendicularly to said post and in that said fixing means have a jaw (310) designed to receive the rigid rod (121) of the end-piece (120), said jaw consisting of a hook (303) and a sliding tube (305) co-operating with a milled nut (320) mounted on the threaded rod (302) enabling the width of the jaw (310) to be adjusted so that it can retain the end-piece firmly.

3. A device as claimed in one of claims 1 to 2, characterised in that the retaining means (500) consist on the one hand of a jaw (510) positioned at one end of a rigid rod (520) and on the other of a hook (530) position at the other end of the rigid rod (520) designed to support the connector in its first position (C1) and hold it immobile in the orifice (124) of said head (122).

4. A device as claimed in one of claims 1 to 3, characterised in that the clamp system (800) has a screw thread (810) onto which the connector is screwed.

5. A device as claimed in claim 2, characterised in that the locking/unlocking means (700) consist of:
- a sleeve (710) subdivided into two longitudinal parts (711, 712) mounted through said post (200); the first part (711) being internally threaded and being of a diameter greater than that of the second part (712); this second part (712) receiving at its free end an end of the threaded rod (302) supporting the fixing means (300),
- a first tapered screw (720) received in the free end of said first threaded part (711) of said sleeve (710) so as to prevent the threaded rod (302) and fixing means (300) from rotating due to the pressure of the tip on the end (308) of the rod and
- a second tapered screw (730) located on top of the second part (712) of the sleeve (710) having the smaller diameter in order to prevent any movement in translation of the unit consisting of the fixing means (300) for the end-piece (120), the threaded rod (302) and the sleeve (710).

6. A device as claimed in one of claims 1 to 5, characterised in that said clamp system (800) is mounted on the post (200) by means of a support (600) which can be re-oriented and is designed to bear said clamp system (800).

7. A device as claimed in claim 6, characterised in that the adjustable support (600) consists of:
- a coated U-shaped piece (610) having an orifice (615) on each of the two parallel branches (B1, B2) of the "U" (610) to allow the post (200) to be inserted therethrough,
- a block (630) retained fixed on the post (200) between the two parallel branches (B1, B2) of the "U"-shaped piece (610) and
- a spring (640) applying a return force between said fixed block (630) and the bottom branch (B2) of the "U"-shaped piece so as to allow the top branch (B1) of the "U"-shaped piece to move to bear on said fixed block,
- the clamp system (800) being fixed to the base of said "U"-shaped piece (610).

8. A device as claimed in claim 7, characterised in that the adjustable support (600) also has at least one recess (660) formed on the internal face of the top branch (B1) of the "U"-shaped piece, designed to receive a lug (650) provided on the post (200) and located immediately above the position of the block (630) in order to define at least one specific angular position of the support about the longitudinal axis (201) of the post (200).

9. A device as claimed in claim 7, characterised in that the adjustable support (600) also has a ball bearing disposed between the block (630) and the top branch (B1) of the "U"-shaped piece (610) in order to facilitate rotation thereof about the longitudinal axis (201) of the post (200).

10. A device as claimed in claim 6, characterised in that the adjustable support (600) is located on the central part of the longitudinal axis (201) of the post (200).

11. A device as claimed in claim 2, characterised in that the fixing means (300) for the end-piece (120) and the locking/unlocking means (700) are located in the upper part of the post (200).

12. A device as claimed in one of claims 1 to 11, characterised in that the lower part of the post (200) is fixed onto a horizontal plate (400).

13. A device as claimed in claim 12, characterised in that a fibre-grip system (410) is attached to the plate (400) and in that this system has a mobile part (411) connected to another fixed part (413) by means of two screws (414) placed at the top ends of the two parts.

14. A device as claimed in claim 12, characterised in that the plate (400) also has a foam block (420) in which one or more compartment(s) is (are) formed in order to house one or more tubes of resin.

15. A device as claimed in claim 12, characterised in that two pins (430) are also arranged on the plate (400) behind the foam block (420).

16. A device as claimed in claim 12, characterised in that the plate (400) has a channel (440).

17. A device as claimed in one of claims 1 to 16, characterised in that it is made from stainless steel.
